# EUROPEAN PATENT APPLICATION

(11) **EP 4 660 722 A1**
(43) Date of publication of application: **10.12.2025**
(21) Application number: 24180523.3
(22) Date of filing: 06.06.2024
(51) Int. Cl.: G05B 17/02, B30B 11/00

(54) **METHOD AND DEVICE FOR CONFIGURING A CONTINUOUS PROCESSING SYSTEM**

(71) Applicant: Fette Compacting GmbH, 21493 Schwarzenbek (DE)
(72) Inventor: SCHÖLER, Martin, 21029 Hamburg (DE); KLUKKERT, Marten, 20144 Hamburg (DE); NOVIKOVA, Anna, 22609 Hamburg (DE)
(74) Representative: Hauck Patent- und Rechtsanwälte PartmbB

(57) **Abstract**

The invention pertains to a method and device for configuring a continuous processing system for processing powder materials, wherein the continuous processing system comprises several system components, namely powder feeders for feeding powder materials through inlets of the continuous processing system, and a mixing device for mixing the powder materials fed by the powder feeders to obtain a powder mixture. The invention also pertains to a continuous processing system.

## Description

The invention pertains to a method for configuring a continuous processing system for processing powder materials, wherein the continuous processing system comprises several system components, namely powder feeders for feeding powder materials through inlets of the continuous processing system, and a mixing device for mixing the powder materials fed by the powder feeders to obtain a powder mixture. The invention also pertains to a device for configuring a continuous processing system for processing powder materials.

Solid dosage forms or oral solid dosages (OSD), such as tablets or capsules, can be produced for example in tablet presses, in particular rotary tablet presses, or capsule filling machines. In continuous processing systems different powder materials are introduced through inlets and continuously fed to further system components by powder feeders, for example to a mixing device, where they are blended continuously to a powder mixture. The powder materials can comprise for example at least one active pharmaceutical ingredient (API) and at least one excipient. The powder mixture can further be conveyed continuously from the mixing device to a processing machine, such as a tablet press or a capsule filling machine. Such continuous processing systems can also comprise other processing machines, for example granulators or roller compactors. Furthermore, stand alone continuous processing systems are known which do not include a processing machine. Such systems can also comprise collection units, such as collection bins, for collecting powder products, such as a powder mixture or for example tablets. The powder feeders can also comprise dosing devices for dosing powder materials to be processed. Such a production process is also referred to as a direct processing process or, in particular with regard tablet presses, direct compression process. A continuous processing system is known for example from EP 4 005 663 A1.

The development of promising drug candidates towards a final tablet drug product usually contains several development steps over several years in clinical phases. For developing a drug candidate into a potential effective formulation, for each clinical stage and eventual final drug product various technologies and equipment are used during different steps. As a result, a wide variety of different data is generated on different equipment, where variability occurs essentially from three stages, namely material and formulation variability due to inherent changes, process parameter changes to enable focus development for the next development step, (intermediate) quality attributes of the (intermediate) product.

Ryckaert A. et al., TPLS as predictive platform for twin-screw wet granulation process and formulation development, International Journal of Pharmaceutics, Volume 605, 2021, describes a twin-screw wet granulation process and based on such process a formulation development model is suggested, more specifically, a T-shaped partial least squares (TPLS) model, to link raw material properties, the ratios in which these raw materials are combined, and the applied process parameters for the twin-screw wet granulation process with the granule quality attributes. The model shall provide a reasonable starting point for formulation and process development for new APIs.

The sequential development process carried out in the prior art does not provide adequate bridging between various technologies and results from intermediate development steps. A reason is the complexity of the technological characteristics of each step such that data gathered, stored and evaluated manually is insufficient to cover the relevant factors of influence and to be practically applied by industry in the time limited drug development phases. Continuous processing systems used during the development of potential drug candidates cannot be effectively configured in a targeted manner. In particular, a considerable number of experiments for the configuration setup of the continuous processing system are necessary to find an optimal configuration for testing and finding a promising formulation candidate. This can result in two major issues. On the one hand, more product is consumed during the tests and development, wherein this product, in particular regarding certain APIs, is expensive and has very limited availability. On the other hand, the overall development time for a final drug product is high.

Based on the above explained prior art it is therefore an object of the present invention to provide a method and device of the above-mentioned type which allow configuring a continuous processing system for achieving desired product properties of powder materials processed in the system faster and in a more targeted manner.

The invention solves the above object on basis of independent claims 1 and 8. Advantageous embodiments are the subject of the dependent claims, as well as the specification and the drawings.

For a method of the above-mentioned type the invention solves the object and by the following steps:
- providing an emulator, said emulator emulating at least one of the system components with a smaller processing capacity than the at least one system component,
- providing a database, in which groups of parameter data are stored, namely in a first group powder parameter data of powder properties of the powder materials, in particular the powder materials to be fed by the powder feeders, in a second group component parameter data of component properties of system components and the emulator, in a third group process parameter data of process properties of system components and the emulator during operation, and in a fourth group product parameter data of product properties of the powder materials after processing in the emulator and/or at least one of the system components,
- correlating parameter data of different groups stored in the database such that for parameter data from at least two groups parameter data from the other groups of the four groups can be determined,
- for powder parameter data of the powder materials to be fed by the powder feeders and component parameter data of the emulator, process parameter data of the emulator is determined on basis of the correlation to obtain specified product parameter data,
- the powder materials are processed in the emulator with the determined process parameter data and actual product parameter data of the powder materials processed in the emulator is obtained, in particular using a product parameter data sensor,
- the specified product parameter data is compared with the actual product parameter data, and at least the system component emulated by the emulator is configured on basis of the comparison.

For a device of the above-mentioned type the invention solves the object in
- that the device comprises an emulator, said emulator emulating at least one of the system components with a smaller processing capacity than the at least one system component,
- that the device further comprises a database, in which groups of parameter data are stored, namely in a first group powder parameter data of powder properties of the powder materials, in particular the powder materials to be fed by the powder feeders, in a second group component parameter data of component properties of system components and the emulator, in a third group process parameter data of process properties of system components and the emulator during operation, and in a fourth group product parameter data of product properties of the powder materials after processing in the emulator and/or at least one of the system components,
- that in the database parameter data of different groups stored in the database is correlated such that for parameter data from at least two groups parameter data from the other groups of the four groups can be determined,
- that the device comprises a control apparatus, said control apparatus being configured to determine process parameter data of the emulator for powder parameter data of the powder materials to be fed by the powder feeders and component parameter data of the emulator on basis of the correlation to obtain specified product parameter data,
- that the control apparatus is further configured to process the powder materials in the emulator with the determined process parameter data and to obtain actual product parameter data of the powder materials processed in the emulator, in particular using a product parameter data sensor,
- that the control apparatus is further configured to compare the specified product parameter data with the actual product parameter data, and to configure at least the system component emulated by the emulator on basis of the comparison.

As explained above, the continuous processing system comprises at least two inlets, preferably more than two inlets, through which in particular different powder materials can be introduced for processing. Powder feeders of the continuous processing system are associated with the inlets for continuously feeding the powder materials through the inlets to a subsequently arranged system component, in particular a mixing device. The powder feeders can for example comprise loss in weight (LIW) feeders. The mixing device continuously mixes the powder materials to obtain a powder mixture. The continuous processing system can comprise a processing machine for processing the powder mixture to a processed product as a further system component. The powder mixture can then be fed continuously to the subsequently arranged processing machine, for example a tablet press, in which the powder materials are continuously processed, for example pressed to tablets. As explained above, the powder feeders may also comprise dosing devices for dosing the powder materials introduced to the system. As also explained above, the powder materials fed to the continuous processing system can comprise one or more active pharmaceutical ingredients (APIs) and one or more excipients. Of course, the continuous processing system could also comprise more than one mixing device, arranged for example subsequently. The continuous processing system could also comprise more than one processing machine, for example a granulator and a subsequently arranged tablet press or capsule filling machine. As further explained above, for example solid dosage forms, such as oral solid dosages (OSD), in particular tablets, can be produced in the continuous processing system. The system may be a direct processing system, in particular a direct compression system. The powder materials may be dry powder materials.

According to the invention at least one emulator is provided which emulates the function of at least one of the system components, wherein the emulator has a smaller processing capacity than the emulated system component but is reflecting similar process dynamics as the original system component. The emulator thus works similarly as the emulated system component, but on a smaller scale, in particular with a smaller processing capacity. The emulator thus uses less powder material than the emulated system component. Nevertheless, the function of the emulator is similar to that of the emulated system component such that data obtained in the emulator can be used for characterization of the emulated system component. Regarding for example an emulator emulating the processing machine, such an emulator can emulate (the function of) the entire processing machine, such that the emulator could for example be a small laboratory tablet press. Such an emulator can also emulate only a part of the processing machine, for example a feeding device of a tablet press.

According to the invention, furthermore a database is provided in which four groups of parameter data are stored, namely powder parameter data, component parameter data, process parameter data, and product parameter data. These four groups of parameter data represent the data relevant for the processing of the powder materials. The powder parameter data contains data regarding powder properties of the initial powder materials before being processed. This data can for example comprise data regarding the particle size of the powder material or the particle size distribution, as well as content and constitution of the powder materials or further powder material data, such as density, humidity, flowability, adhesiveness. The component parameter data comprises data regarding the properties of the components present in the continuous processing system and/or the at least one emulator. This data thus characterizes the hardware components that are being used in the method and device. The process parameter data comprises data regarding the process properties of the system components and the at least one emulator during operation. They can for example relate to feeding speed of feeders, mixing parameters of a mixing device, for example rotational speed of a mixing screw, or for example production speed of the processing machine, for example rotational speed of a rotor of a tablet press. The product parameter data comprises data regarding the product properties of the powder materials or the powder mixture after having been processed in the emulator and/or in at least one of the system components. They can for example relate to an API content in the powder mixture produced by the mixing device or parameter data of tablets produced in a tablet press, such as tablet weight, tablet hardness, API content in the tablet and so forth. The parameter data of the four groups is stored according to the invention in a database such that they are accessible in a reproducible manner at any time.

Parameter data of the first group is usually given and can usually not be easily changed. Parameter data from the second group, i.e. the hardware, can be adjusted to the product up to some degree. This relates for example to format parts in emulators, screw types of feeders or mixing devices, feeding wheels, etc.. The process parameter data of the third group can be adapted, in particular to achieve specified, desired product parameter data of the fourth group. The parameter data of the four groups in the database are correlated such that for parameter data from at least two groups parameter data from the other groups of the four groups can be determined. For example, for given powder parameter data and given component parameter data and desired product parameter data matching process parameter data can be determined on basis of the inventive correlation. It is thus possible to predict matching process parameter data for the powder materials and the components used in the continuous processing system which will, according to the database correlation, lead to the desired specified product parameter data. Of course, this relates also to intermediate steps in the continuous processing system.

The correlation of the parameter data stored in the database can be carried out based on experimental data, in particular through corresponding experiments. For example, it would be possible to obtain the correlation by carrying out series of experiments in which product parameter data is determined for varying combinations of powder parameter data, component parameter data and process parameter data. In this case different combinations of parameter data are set and for example resulting product parameter data are measured. Such experiments can be carried out in a continuous processing system, for example the system to be configured, or in a separate system. The experiments may also be carried out using one or several emulators, for example feeder emulators. The correlation of the parameter data stored in the database can also be carried out by an algorithm, stored for example in the database and/or the control apparatus. Such an algorithm can allow determining the correlation of the groups of parameter data also for data which has not been experimentally tested. Such an algorithm can include an algorithm based on machine learning, in particular so called artificial intelligence (AI), based on training data and/or experimental data. Such an algorithm can for example be based on neural networks. The algorithm can also use analysis methods, such as multivariate data analysis, in particular comprising a principal components analysis (PCA).The multivariate data analysis can also comprise a partial least square regression method (PLS/PLSR). The correlation can be optimized during use of the method and device according to the invention, in particular based on experience data acquired during use.

According to the invention it is suggested to process powder materials in at least one emulator with the process parameter data determined in this manner and to obtain, in particular measure with a (soft) sensor, actual product parameter data of powder materials processed in the emulator, in particular with a product parameter data sensor. By comparing the specified or desired product parameter data with the actual product parameter data it is possible to identify possibly necessary adjustments to the process parameter data based on real test results obtained with the emulator. On this basis, the system component emulated by the emulator can be configured, in particular can be set to the optimum process parameter data as identified by the test on the emulator. The configuration of the system component thus in particular comprises setting process parameters for the system component to obtain desired product parameters after processing powder materials in the respective system component. If course, also more than the system component emulated by the respective emulator can be configured on basis of this comparison. In this manner the continuous processing system can be configured, in particular a recipe for processing the powder materials in the continuous processing system can be found, in particular for the development of a formulation product. The process parameters can thus in particular include setpoints and recipes.

The at least one emulator and the system components are preferably connected with the database with appropriate interfaces. This allows data exchange with the database, preferably bidirectional data exchange. This again allows using the database as a central knowledge platform. Regarding the data stored in the database, also historical process models of the at least one emulator and/or the system components can be considered, i.e. system dynamics of the components/emulator.

The invention allows a pragmatic approach towards the product formulation development from a very early phase up to the final product. This is achieved with low material consumption which is relevant and fit for scaling technologies combined with data gathering into a pool system, i.e. the database, bridging the gap between different processing development steps by seamlessly suggesting optimal start process parameters of a next step based on data interpretation of a previous step. To this end, it is also possible to consider results from the inventive method in particular for following development steps of a formulation candidate. The inventive method can thus be carried out repeatedly during the development stages of finding a final product, wherein configuration results of each development step can be considered for the following development step(s).

The invention allows a seamless connection from early research and development devices, namely emulators, up to final production machines, i.e. components of a continuous processing system, with optimum starting conditions for every component, keeping in mind the dynamics and specifics of every component by using the relevant data from the database. Fully automated protocols are possible, thus reducing formulation development times, operator mistakes, material consumption within the development process, while at the same time contributing to increase quality and robustness of formulations during final production.

On basis of the invention, considerably more parameter data can be considered, in particular from the emulators as test devices, than previously. The parameter data does not need to be restricted to mean values or static data, but can also comprise transient data sets which are then analysed. The design of the emulators can be optimized to provide best similarities with regard to the system components, both on mechanical design and process dynamics, and thus to improve the accuracy of the prediction of suitable process parameters and at the same time reduce the number of parameters that need to be monitored to create a better data fit.

According to an embodiment the the actual product parameter data can be obtained using a product parameter data sensor, which can comprise at least one of a powder flowability sensor, a spectroscopic sensor, like an NIR or LIF or Raman sensor, a feeding rate sensor, a filling level sensor, and a weight sensor, in particular a weight scale sensor. Weight sensors are used for example in powder feeders and the mixing device and can also be used in the respective emulators. This helps to further reduce the time and product necessary for configuring the continuous processing system. The product parameter data sensors used in the at least one emulator can be sensors which are of a similar or of the same type as the ones used in the continuous processing system to create most comparable results. For example with spectroscopic sensors it is possible to measure the API content in a powder mixture or in a final product, such as a tablet.

As an example, a product parameter data sensor, such as a device that measures the flowability behaviour, i.e. the flowability index, of the powder materials can be combined with a (soft) sensor that effectively measures powder during feeding. This (soft) sensor data together with the applied process parameters can be introduced into the database to adjust for example the correlation of the data in the database for a next processing step, for example in a subsequent emulator or system component. To this end also a comparison with historical data sets can be carried out. Methods such as PCA analysis and/or artificial intelligence (AI) models can be used. The same can be done with the product parameter data and the process parameters used for example on a processing machine, like a tablet press. Altogether, better initial settings for trials with product can be generated so that the total consumption of product, which is particularly expensive in early development, is reduced. This is helped by the smaller processing capacity of the emulators. Less time is necessary for the development due to better targeted trials. Also, a seamless transfer from devices and towards final production equipment is possible.

As explained above the continuous processing system may comprise a collection unit, for example a collection bin, for collecting for example a powder mixture produced in the system for further processing. The continuous processing system may thus be a stand alone continuous processing system. The continuous processing system can also comprise a processing machine for processing the powder mixture to a processed product as a further system component. The processing machine can comprise a granulator or a tablet press or a capsule filling machine. The tablet press can for example be a rotary tablet press. Such rotary tablet presses are known to the person skilled in the art. They usually comprise a rotor with a die disk having a plurality of cavities to which cavities in each case a pair of upper and lower punches is assigned which rotate together with the die disk. A powder mixture is filled into the cavities by a filling device of the rotary tablet press and is pressed to tablets by the upper and lower punches. Subsequently, the pressed tablets are ejected from the cavities, for example by pushing the lower punches upwards such that the tablets can be removed from the upper surface of the die disk by an ejector device, for example comprising a scraper.

According to a further embodiment the processing capacity of the emulator may be not more than 50%, preferably not more than 20%, more preferably not more than 10%, even more preferably less than 5%, of the processing capacity of the system component emulated by the emulator. This allows particularly efficient savings on powder materials.

According to a further embodiment the correlation of the parameter data of the different groups stored in the database can be adjusted on basis of the obtained actual product parameter data. As explained above, it is possible to optimize the data stored in the database and the correlation between the different groups of parameter data based on actual data obtained in the at least one emulator and/or the system components, for example based on measuring data obtained by product parameter data sensor.

According to a further embodiment several emulators may be provided emulating several, preferably all, of the system components with a smaller processing capacity than the respective system component. As explained above it is possible to provide a number of emulators, wherein each emulator emulates the function of a system component, in particular precisely one system component. For full coverage it is possible to provide emulators for all of the system components. However, it is also possible to provide emulators for only some of the system components, in particular those system components particularly relevant for the process. When several emulators are provided, it is generally possible that they are arranged subsequently in a processing line emulating the processing line in the continuous processing system. The inventive method, in particular according to the last three paragraphs of claim 1, can be carried out for all emulators, such that several or all of the system components can be configured on basis of the product parameter data obtained in the emulator emulating the respective system components. The actual product parameter data in these cases can be obtained with suitable product parameter data sensors, as explained above.

According to a further embodiment it is then possible that the obtained actual product parameter data of the powder materials processed in at least one of the emulators is considered for the determination of process parameter data of at least one other emulator, for example arranged subsequently in the processing line. The processing line is defined by the order in which the powder materials and/or powder mixture progresses through the system components in the continuous processing system. Thus, the powder feeders are arranged prior to the mixing device and the mixing device is arranged prior to the processing machine. As also explained above, the obtained actual product parameter data of the powder materials processed in at least one of the emulators can also be considered for the determination of process parameter data of the same emulator in a further development step, for example in the development process of a formulation.

The invention also pertains to a continuous processing system for processing power materials, comprising several system components, namely powder feeder for feeding powder materials to inlets of the continuous processing system, a mixing device for mixing the powder materials fed by the powder feeders to obtain a powder mixture, and a processing machine for processing the powder mixture to a process product, wherein the continuous processing system comprises a device according to the invention. The system components can be embodied as explained above. The processing machine can for example comprise a granulator or a tablet press or a capsule filling machine.

The inventive method can be carried out with the inventive device or the inventive continuous processing system. Accordingly, the inventive device or the inventive continuous processing system can be configured to carry out the inventive method.

An embodiment of the invention will be explained in more detail below with reference to the drawings. The drawings schematically show:
- Figure 1: an inventive device and continuous processing system,
- Figure 2: a part of the device and system shown in figure 1 in a perspective view,
- Figure 3: a visualization of the correlation between parameter data from different groups and a prediction of parameter data, and
- Figure 4: an arrangement of emulators of the inventive device and continuous processing system.

In the drawings the same reference numerals shall denote the same parts.

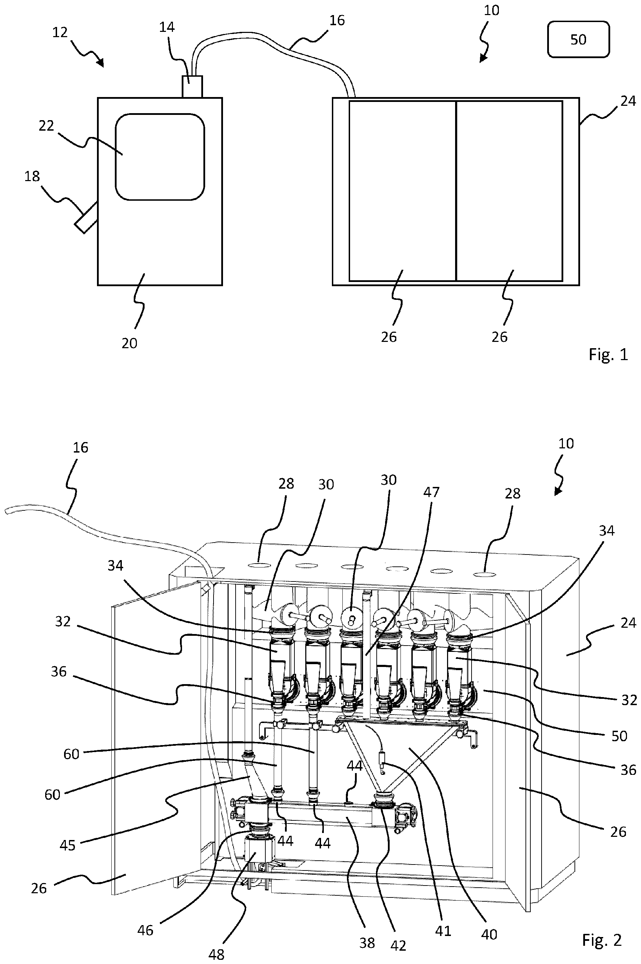

The continuous processing system shown in Figure 1, comprising an inventive device, is a system for continuous production of solid dosage forms in direct processing. The system comprises a feeding and mixing system 10 and a processing machine 12, for example a tablet press, such as a rotary tablet press, or a capsule filling machine. The processing machine 12 comprises an inlet 14 which is connected with a hose 16 of a product conveying device conveying a powder mixture from the feeding and mixing system 10 to the inlet 14 of the processing machine 12, where the powder mixture is continuously processed to solid dosage forms, such as tablets or capsules. The produced solid dosage forms are discharged via an outlet 18 of the processing machine 12. The processing machine 12 comprises a machine housing 20 with a window 22. The feeding and mixing system 10 comprises a system housing 24 with doors 26, which are opened in Figure 2 to view the internal parts of the feeding and mixing system 10. The system shown in Figure 1 is a one-floor arrangement where the feeding and mixing system 10 and the processing machine 12 are provided on the same level, in particular the same floor level.

In Figure 2 six inlets 28 of the continuous processing system can be seen via which different powder materials can be introduced into the feeding and mixing system 10. The inlets 28 lead to six automatic refill systems, each comprising a horizontal refill screw 30. Powder feeders 32, also comprising dosing devices are arranged in a row, in particular along a horizontal line. Inlet connections 34 are arranged between the refill screws 30 and the powder feeders 32. The powder feeders 32 further each comprise an outlet 36 for feeding powder materials supplied via inlets 28 and the refill units 30 to a mixing device 38. The mixing device 38 comprises a horizontal mixing tube 39 for mixing the different powder materials to the desired powder mixture. In the example shown in the drawings, a funnel or hopper 40 is arranged between the powder feeders 32 and the mixing device 38, said funnel or hopper 40 combining product streams from four of the six powder feeders 32 into one product stream and into a first inlet 42 of the mixing device 38. The funnel or hopper 40 may be provided with a vibration device 41 for promoting powder flow in the funnel or hopper 40. The mixing device 38 comprises further inlets 44 through which powder streams from further powder feeders 32 can be introduced into the mixing device 38 for example via vertical tubes 60. A venting pipe 45 is provided on the end opposite inlet 42 of the mixing device 38 for venting air into the environment. A similar venting pipe 47 is provided at the top of the funnel or hopper 40. The mixing device 38 further comprises an outlet 46 through which the produced powder mixture is provided to a outlet hopper 48, from which the powder mixture is conveyed via hose 16 to the inlet 14 of the processing machine 12 for further processing. The inventive continuous processing system further comprises a control apparatus 50.

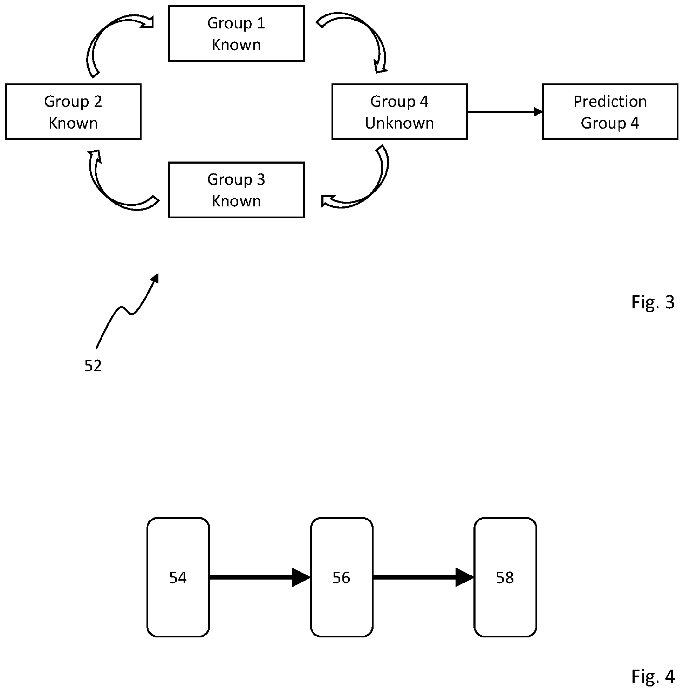

Turning to figure 3, the correlation of parameter data of the four groups stored in the inventive database 52 is visualized through arrows. For example on basis of the correlation of the parameter data stored in database 52 it is possible for given parameter data from groups 1, 2 and 3 to predict parameter data of group 4, as shown schematically in figure 3. It is also possible on basis of the inventive correlation, to predict parameter data of groups 3 and 4 for given parameter data for example of groups 1 and 2. The correlation in the database can be determined experimentally through corresponding experiments and/or through corresponding algorithms, for example algorithms of machine learning, in that case also for combinations of parameter data which have not been covered with corresponding experiments, as has been explained above.

Figure 4 shows as an example 3 emulators 54, 56, 58 emulating system components of the inventive continuous processing system. For example, emulator 54 can emulate at least one of the powder feeders 32, emulator 56 can emulate mixing device 38, and emulator 58 can emulate at least a part of processing machine 12, each with a considerably lower processing capacity than the emulated system components. It would be generally possible to arrange emulators 54, 56, 58 subsequently according to the arrangement of the emulated system components in the processing line of the continuous processing system as indicated by arrows in figure 4. However, in a more practical approach, data from the emulators can be used directly to configure the system component emulated by the respective emulator.

Based on the correlation of the parameter data in the database 52 it is possible to determine process parameter data of the emulators 54, 56, 58 for powder parameter data of the powder materials to be fed by the powder feeders 32 and component parameter data of the emulators 54, 56, 58 to obtain specified product parameter data. The powder materials can be processed in the emulators 54, 56, 58 with the process parameter data determined for each of the emulators 54, 56, 58. Using suitable product parameter data sensors, which are known *per se* to the person skilled in the art, and which can be embodied as explained above, actual product parameter data of the powder materials processed in the respective emulators 54, 56, 58 can be obtained in each case. Control apparatus 50 can compare the specified or desired product parameter data with the obtained actual product parameter data. On this basis it is possible to configure the emulated system components in order to configure the continuous processing system in an optimum way, as explained above.

### List of reference numerals

- 10: mixing system
- 12: processing machine
- 14: inlet
- 16: hose
- 18: outlet
- 20: machine housing
- 22: window
- 24: system housing
- 26: doors
- 28: inlets
- 30: refill screws
- 32: powder feeders
- 34: inlet connections
- 36: outlet of feeders
- 38: mixing device
- 39: mixing tube
- 40: funnel or hopper
- 41: vibration device
- 42: inlet
- 44: inlet
- 45: venting pipe
- 46: outlet of mixing device
- 47: venting pipe
- 48: outlet hopper
- 50: control apparatus
- 52: database
- 54: emulator
- 56: emulator
- 58: emulator
- 60: vertical tubes

## Claims

1. Method for configuring a continuous processing system for processing powder materials, wherein the continuous processing system comprises several system components, namely powder feeders (32) for feeding powder materials through inlets (28) of the continuous processing system, and a mixing device (38) for mixing the powder materials fed by the powder feeders (32) to obtain a powder mixture, the method being **characterized by** the following steps:
• providing an emulator (54, 56, 58), said emulator (54, 56, 58) emulating at least one of the system components with a smaller processing capacity than the at least one system component,
• providing a database (52), in which groups of parameter data are stored, namely in a first group powder parameter data of powder properties of the powder materials, in a second group component parameter data of component properties of system components and the emulator (54, 56, 58), in a third group process parameter data of process properties of system components and the emulator (54, 56, 58) during operation, and in a fourth group product parameter data of product properties of the powder materials after processing in the emulator (54, 56, 58) and/or at least one of the system components,
• correlating parameter data of different groups stored in the database (52) such that for parameter data from at least two groups parameter data from the other groups of the four groups can be determined,
• for powder parameter data of the powder materials to be fed by the powder feeders (32) and component parameter data of the emulator (54, 56, 58), process parameter data of the emulator (54, 56, 58) is determined on basis of the correlation to obtain specified product parameter data,
• the powder materials are processed in the emulator (54, 56, 58) with the determined process parameter data and actual product parameter data of the powder materials processed in the emulator (54, 56, 58) is obtained,
• the specified product parameter data is compared with the actual product parameter data, and at least the system component emulated by the emulator (54, 56, 58) is configured on basis of the comparison.

2. Method according to claim 1, **characterized in that** the emulator (54, 56, 58) and the system components exchange data with the database (52).

3. Method according to one of the preceding claims, **characterized in that** the actual product parameter data is obtained using a product parameter data sensor, which comprises at least one of a powder flowability sensor, a spectroscopic sensor, a feeding rate sensor, a filling level sensor, and a weight sensor.

4. Method according to one of the preceding claims, **characterized in that** the continuous processing system comprises a processing machine (12) for processing the powder mixture to a processed product as a further system component, in particular a granulator or a tablet press (12) or a capsule filling machine.

5. Method according to one of the preceding claims, **characterized in that** the correlation of the parameter data of the different groups stored in the database (52) is adjusted on basis of the obtained actual product parameter data.

6. Method according to one of the preceding claims, **characterized in that** several emulators (54, 56, 58) are provided emulating several, preferably all, of the system components with a smaller processing capacity than the respective system component.

7. Method according to claim 6, **characterized in that** the obtained actual product parameter data of the powder materials processed in at least one of the emulators (54, 56, 58) is considered for the determination of process parameter data of at least one other emulator (54, 56, 58).

8. Device for configuring a continuous processing system for processing powder materials, wherein the continuous processing system comprises several system components, namely powder feeders (32) for feeding powder materials through inlets (28) of the continuous processing system, and a mixing device (38) for mixing the powder materials fed by the powder feeders (32) to obtain a powder mixture, **characterized in**
• **that** the device comprises an emulator (54, 56, 58), said emulator (54, 56, 58) emulating at least one of the system components with a smaller processing capacity than the at least one system component,
• **that** the device further comprises a database (52), in which groups of parameter data are stored, namely in a first group powder parameter data of powder properties of the powder materials, in a second group component parameter data of component properties of system components and the emulator (54, 56, 58), in a third group process parameter data of process properties of system components and the emulator (54, 56, 58) during operation, and in a fourth group product parameter data of product properties of the powder materials after processing in the emulator and/or at least one of the system components,
• **that** in the database (52) parameter data of different groups stored in the database (52) is correlated such that for parameter data from at least two groups parameter data from the other groups of the four groups can be determined,
• **that** the device comprises a control apparatus, said control apparatus being configured to determine process parameter data of the emulator (54, 56, 58) for powder parameter data of the powder materials to be fed by the powder feeders (32) and component parameter data of the emulator (54, 56, 58) on basis of the correlation to obtain specified product parameter data,
• **that** the control apparatus is further configured to process the powder materials in the emulator (54, 56, 58) with the determined process parameter data and to obtain actual product parameter data of the powder materials processed in the emulator (54, 56, 58),
• **that** the control apparatus is further configured to compare the specified product parameter data with the actual product parameter data, and to configure at least the system component emulated by the emulator (54, 56, 58) on basis of the comparison.

9. Device according to claim 8, **characterized in that** the emulator (54, 56, 58) and the system components are connected with the database (52) for data exchange.

10. Device according to one of claims 8 or 9, **characterized in that** the actual product parameter data is obtained using a product parameter data sensor, which comprises at least one of a powder flowability sensor, a spectroscopic sensor, a feeding rate sensor, a filling level sensor, and a weight sensor.

11. Device according to one of claims 8 to 10, **characterized in that** the continuous processing system comprises a processing machine (12) for processing the powder mixture to a processed product as a further system component, in particular a granulator or a tablet press or a capsule filling machine.

12. Device according to one of claims 8 to 11, **characterized in that** the control apparatus is configured to adjust the correlation of the parameter data of the different groups stored in the database (52) on basis of the obtained actual product parameter data.

13. Device according to one of claims 8 to 12, **characterized in that** it comprises several emulators (54, 56, 58) emulating several, preferably all, of the system components with a smaller processing capacity than the respective system component.

14. Device according to claim 13, **characterized in that** the control apparatus is configured to consider the obtained actual product parameter data of the powder materials processed in at least one of the emulators (54, 56, 58) for the determination of process parameter data of at least one other emulator (54, 56, 58).

15. Continuous processing system for processing powder materials, comprising several system components, namely powder feeders (32) for feeding powder materials through inlets (28) of the continuous processing system, a mixing device (38) for mixing the powder materials fed by the powder feeders (32) to obtain a powder mixture, **characterized in that** it comprises a device according to one of claims 8 to 14.
